# EUROPEAN PATENT SPECIFICATION

(11) **EP 2 997 169 B1**
(45) Date of publication and mention of the grant of the patent: **08.08.2018**
(21) Application number: 14739960.4
(22) Date of filing: 09.05.2014
(51) Int. Cl.: C22B 1/00, C22B 7/00, C22B 17/00, B03B 9/06

(54) **PROCESS FOR TREATING SPENT PHOTOVOLTAIC PANELS**
VERFAHREN ZUR BEHANDLUNG VON AUSGESCHALTETEN PV-MODULEN
PROCÉDÉ DE TRAITEMENT DES PANNEAUX PHOTOVOLTAÏQUES USAGÉS

(30) Priority: 14.05.2013 IT RM20130286
(43) Date of publication of application: 23.03.2016
(73) Proprietor: ECO Recycling s.r.l., 01033 Civita Castellana (VT) (IT); Ga Energy S.p.A., 00143 Roma (RM) (IT)
(72) Inventor: TORO, Luigi, I-01033 Civita Castellana (VT) (IT); PAGNANELLI, Francesca, I-01033 Civita Castellana (VT) (IT); GRANATA, Giuseppe, I-01033 Civita Castellana (VT) (IT); MOSCARDINI, Emanuela, I-01033 Civita Castellana (VT) (IT)
(74) Representative: Raimondi, Adriana
(86) International application number: PCT/IT2014/000124
(87) International publication number: WO 2014/184816

(56) References cited:
- WO-A1-2012/101189
- DE-A1-102008 058 530
- US-A- 6 129 779
- US-A1- 2012 325 676
- BOHLAND J ET AL: "Economic recycling of CdTe photovoltaic modules", CONFERENCE RECORD OF THE 26TH IEEE PHOTOVOLTAIC SPECIALISTS CONFERENCE - 1997. PVSC '97. ANAHEIM, CA, SEPT. 29 - OCT. 3, 1997; [IEEE PHOTOVOLTAIC SPECIALISTS CONFERENCE], NEW YORK, NY : IEEE, US, 29 September 1997 (1997-09-29), pages 355-358, XP010267798, DOI: 10.1109/PVSC.1997.654101 ISBN: 978-0-7803-3767-1

## Description

### Field of the invention

The present invention relates to an automated process for the treatment of end-of-life photovoltaic panels based on silicon (mono and polycrystalline, and amorphous silicon) and cadmium-tellurium thin-film modules. The process of the invention is aimed at recovering the main components of such devices (glass, Te, Zn, Al, Fe, Cd, Ag, Ti, Si).

The proposed recycling process, by means of physical and chemical treatments, guarantees a minimum recovery of raw materials of 80-85% as required by the European Directive 2012/19/EU.

### Prior Art

In recent years the use of photovoltaic panels has been constant growing constantly and is expected to rise further in the forthcoming years. Considering that the average lifespan of a solar panel is about 20 years due to the deterioration of some electrical components and of glass, in the next few years we will be faced with the real issue of treating such end-of-life devices. Therefore, inventing recycling processes is becoming increasingly important, both from the economic and from the environmental regulatory point of view. As a matter of fact, a recycling process of wastes allows, on one hand, to recover the valuable materials that can be sent back to the production cycle and, on the other, prevents their being moved to landfills with the subsequent introduction of hazardous and polluting substances in the environment.

A particularly interesting class of wastes is that of electric and electronic equipment (WEEE) waste. Recently photovoltaic modules have been added to this class, which will thus have to be subjected to separate collection to be then transferred to appropriate recycling processes.

Photovoltaic panels are classified into first (monocrystalline and polycrystalline) and second generation (thin-film modules) devices. First generation ones, currently the most widely installed for domestic and non-domestic purposes, are devices which are mainly made of poly- and mono-crystalline silicon. The thin-film panels include the amorphous silicon and cadmium-tellurium ones.

The following prior art highlights some proposals for the treatment of specific categories of end-of-life photovoltaic panels.

Deutsche Solar AG (Germany) ("STUDY ON THE DEVELOPMENT OF A TAKE BACK AND RECOVERY SYSTEM FOR PHOTOVOLTAIC PRODUCTS, FUNDED BY BMU GRANT NUMBER 03MAP092, CO-FINANCED BY EPIA/BSW-SOLAR", November 2007 and "STUDY ON PHOTOVOLTAIC PANELS SUPPLEMENTING THE IMPACT ASSESSMENT FOR A RECAST OF THE WEEE DIRECTIVE", European Commission DG ENV, final report 2011) developed a solution for the treatment on a pilot scale of modules of crystalline silicon in order to recover the silicon wafers and reprocess them into solar cells, which are subsequently used for the production of new panels. The process mainly consists of the following steps:
- Heating and manual separation of the wafer
- Etching and sequential removal of the metal layer, antireflective layer and of the p-n junction .
- Manual separation of solar cells
- Separate treatment of glass and metals according to traditional methods of recovery
- Chemical treatment of the cells with removal of the diffusion foil through a cleaning process
- Reprocessing of the damaged wafers after etching and cleaning

In particular, the chemical treatment includes the removal of the metal layer, the dissolution of antireflective and etching of the silicon wafers in order to remove the n-doped part. In a series of processes of chemical etching, all these layers are removed with mineral acids and acidic mixtures, the composition of which must be adapted to the different technologies that constitute the module. The Deutsch Solar process has the disadvantage that the panels must be treated manually one by one, according to a sequence of both thermal and chemical operations optimized to treat in the plant only silicon based modules.

In the process developed by First Solar (United States Patent 6,063,995), but not currently used , the crystalline silicon cell is slowly heated and the coating film is removed manually, which thing is the fundamental disadvantage of the process. Then the EVA is pyrolysed in an inert gas atmosphere at about 500°C.

The Solar Cells Inc (SSI) (Vasilis M. Fthenakis, End-of-life management and recycling of PV modules, 2000, Energy Policy, Vol 28, Iss. 14, Page 1051 to 1058) developed a process for recycling of CdTe modules based on:
- manual disassembly of the modules
- grinding by hammer mill with separation of glass, coating and EVA
- chemical dissolution of the product obtained by grinding (with hydrochloric acid and ferric chloride)
- precipitation or electrodeposition of tellurium (total recovery of tellurium: 80%)
- final separation of the glass from the chemical treatment residue.

The main disadvantage of the Solar Cell process is that it provides for processing the CdTe modules only, with manual operations and by use of highly polluting hydrochloric acid.

In a patent by First Solar, Inc. and Perrysburg OH (U.S. 2011/0147230 A1) it is described a method for recycling active elements in photovoltaic modules.

The photovoltaic modules of the patent are those having a semiconductor material deposited on a substrate such as cadmium sulfide or cadmium telluride or those characterized by the presence of a covering of transparent conductive oxide which can be deposited before the conductor layer, for example before the cadmium stannate.

The layers may be removed using chemical, mechanical, electrochemical methods, and a combination thereof.

The pathway described in this patent is that of the chemical method by treatment with HCl made more effective by means of mechanical action, and an electrochemical method which consists of the use of cadmium stannate as the cathode.

The fundamental disadvantages of this process are that it is dedicated solely to the removal of layers of substrates in the panels and makes use of hydrochloric acid that is highly polluting.

First Solar (ref. cited) proposes a process, currently employed for the treatment of CdTe modules, based on:
- Crushing and grinding of modules through a hammer mill
- Removal of the semiconductor film by leaching in a drum reactor for a time of 4-6 hours by the use of a weakly acidic mixture based on sulfuric acid and hydrogen peroxide.
- EVA-glass separation from the leached through classification
- Separation of EVA from the glass with vibro-screening
- Precipitation of metals by addition of sodium hydroxide

As a result we have a final recovery of 90 % of the glass and about 95 % of cadmium and tellurium which in any case must be subjected to an additional purification step. This is a process that involves the leaching of all metals without the possibility of making a selective extraction and leads to a concentrate based on Cd and Te that has to be treated by third parts for the purification.

Patrick Taylor et al . in a patent of 2012 (US2012325676) propose a method for the recycling of cadmium telluride end-of-life photovoltaic modules and production waste.

The process involves :
- delamination in an oven with N₂ environment
- blasting
- roasting to produce Cd and Te oxides
- alkaline leaching to bring in solution the Te recovered by electrolysis

The disadvantages of the process reside in the fact that it is dedicated to only one type of panels and provides physical treatments onerous from the energy point of view (heat treatments and roasting) and that need high cost machinery (delamination and sandblasting).

ANTEC Solar GmbH (Arnstadt, DE) (United States Patent 6,572,782) patented a recycling process for CdTe and CdS thin film modules which provides:
- Size reduction of the modules
- Heat treatment at 300°C in an oxygen atmosphere, causing pyrolysis of the adhesive material contained in the module
- Treatment of residual fragments with chlorine gas at 400°C with CdCl₂ and TeCl₄ formation with subsequent condensation and precipitation.

The disadvantages of this process reside in the fact that it is dedicated only to a type of panels and uses chlorine gas which is a very strong corrosive agent and it is dangerous and costly in industrial-scale applications.

Drinkard MetalOx, Inc. has patented a process (United States Patent 5,997,718) based on the extraction and recovery of metals and glass from CdTe type modules. Their process is divided into the following steps:
- leaching with nitric acid with metal extraction to obtain glass, with is used again to produce new modules.
- Skimming the plastic laminate from the leaching solution
- Neutralization of the leaching solution by calcium with formation of a precipitate based on Cd and Te
- Roasting of the solid precipitate and cooling by washing to recover CdO and TeO

The disadvantages of this process reside in the fact that it is dedicated to only one type of panels and makes use of strongly polluting nitric acid.

Bohland has patented a process (United States Patent 6,129,779) for reclaiming cadmium and tellurium from cadmium telluride solar cells comprising a step of crushing the cells into pieces of glass and polymeric substances having cadmium and tellurium and performing the further extraction steps on said crushed cells.

### Summary of the Invention

It is an object of the present invention a process for the treatment of all types of silicon-based photovoltaic panels, mono/poly crystalline and amorphous, as well as those based on CdTe, which provides for the recovery of material by physical treatments (glass) but also of tellurium, zinc, aluminum, cadmium, titanium, silver, silicon by means of chemical treatments.

These materials are recovered with different degrees of purity and can be advantageously used as secondary raw materials in production processes conventionally fed with primary raw materials, i.e. from mining. The process allows to reach and exceed the minimum target for recovery of materials set by the new European Directive 2012/19/EU to 65% by weight from 2016.

A further object is a physical process made of operations of size reduction and sieving whose development allows the recovery of glass, and of a chemical route for the recovery of tellurium, zinc, aluminum, cadmium, silicon, silver and titanium.

A further object is a chemical pre-treatment for the partial solubilization of EVA, such as to determine an effective separation of the layers of the panel as an alternative to heat treatment.

These objects are described in the appended claims.

Further objects of the invention will become apparent from the detailed description of the invention.

### Brief description of the figures

Figure 1 Block diagram schematically representing the recovery process according to the invention;
Figure 2 Detailed block diagram of the physical section
Figure 3 Detailed block diagram of the chemistry section.

### Detailed description of the invention

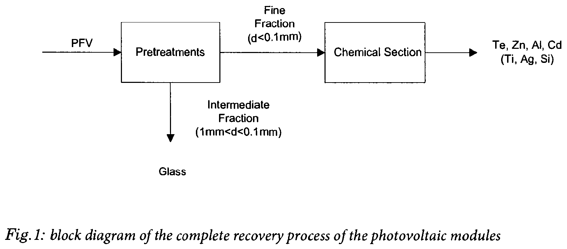

The process of the invention comprises in cooperative relationship the stages as detailed below (hereinafter "stage" or "section" are used as synonyms). It is illustrated in the block diagram of Figure 1 and shortly summarized in the following operations:
- Primary crushing (operation that involves breaking the panel with the formation of material having average size of the order of 2 cm in size), secondary grinding (size reduction to below 0.5 cm) and screening of the thus obtained product with sieves from 1 mm and 0.1 mm, obtaining three fractions: a coarse fraction having a diameter greater than 1 mm, made of glass agglomerates held together by the glue (mainly EVA-ethylene-vinyl acetate copolymer) and/or of the material of the bottom of the panel, possibly different from glass (for example a fluorinated polymer such as Tedlar®); an intermediate fraction having a diameter between 0.1 and 1 mm containing glass which is directly recoverable; a fine fraction with a diameter < 0.1 mm , in which are contained mainly metals and their oxides, mainly Te, Zn, Al, Cd, Ag, Ti, in addition to silicon and glass.
- On the coarse fraction (d > 1mm) a washing is carried out with a suitable solvent for the dissolution of the adhesive, which in the case of EVA is a cyclohexane acetone (70-30 %) mixture which has the purpose of solubilizing the non-crosslinked part of EVA and determine an easier detachment of the glass and the active material (semiconductor material and anti-reflective material). Alternatively, on the coarse fraction can be carried out a heat treatment which, in the case of EVA, can be performed at least at 640°C, typically at 650°C to obtain the combustion of EVA and an enrichment in smaller and clean recoverable fractions such as glass.

After having carried out one of the above treatments, the screening of the treated product is performed again with a 0.1 mm mesh sieve. The fraction with d > 0.1 mm is directly recovered as glass, while the fine fraction (d < 0.1 mm) is sent to the chemical section.
- The intermediate fraction having a size between 1 mm and 0.1 mm (resulting from the secondary grinding and treatment and screening of the coarse fraction) consists of clean glass that can be directly recovered.
- The fine fraction with a diameter less than 0.1mm (resulting from secondary grinding and treatment and screening of the coarse fraction) is subjected to chemical treatment by sequential alkaline leaching. The first selective solution of tellurium is carried out in the form of sodium tellurite in a pH range of between 10 and 12, preferably pH between 10 and 11, more preferably pH 11, typically by means of sodium hydroxide 2-5 M. After a solid-liquid separation, the tellurium is recovered from the liquid stream, while the solid residue is leached with sodium hydroxide 5-10 M (pH 12-14) for the solubilization of zinc and aluminum in the respective forms of zinc and sodium aluminates. After further solid-liquid separation the solid residue is treated with an acidic solution (typically 2-5 M sulfuric acid) for the extraction of Cd and Fe. After solid-liquid separation, the solid residue containing glass, silicon, iron, titanium, silver (in variable proportions depending on the feed upstream of the different types of panels) can be further treated for the selective recovery of metals present or directly sent as secondary raw material alternatively or together with primary raw materials of mineral origin in processes conventionally used for the production of products based on silicon, titanium and silver.

According to another embodiment of the invention the above mentioned sequential alkaline leaching performed on the fine fraction can be replaced by an oxidizing acid leaching as described below. Alternatively, it is possible to treat the fine fraction with an oxidizing acid leaching at pH < 6, typically with 5M H₂SO₄, 10 % H₂O₂, at 50-80°C, for about 2 h, obtaining the simultaneous extraction of Cd, Te, Al, Fe, Zn and a solid residue containing silicon, glass, silver, titanium dioxide. The liquid is subjected to successive stages of alkalinization and precipitation operations for the sequential separation of Al, Fe and Te, respectively in the forms of oxides and hydroxides at increasing pH from 4 to 14. The liquid residue containing mainly zinc and cadmium, is subjected to a subsequent cementation of cadmium and zinc recovery. The solid part is a possibly reusable product in the production of silicon, silver and titanium.

According to a preferred embodiment, the process comprises:

### (1) Preliminary physical operations

### (1.a) Primary crushing - Secondary grinding - Screening

After disassembly of the outer frame from which aluminum is directly recoverable, the photovoltaic panels in the crushing operation undergo a first size reduction, for example through dual- or four shaft shredder with blades, or other equipment with similar performance, without sieving control. This entails partially releasing the various components contained in such devices (glass, ferrous metallic and non-metallic materials, silicon adhesive, such as EVA). Since the glue is not destroyed during the shredding, the main product of this operation is made of aggregates of glass-adhesive (possibly Tedlar-silicon) having size greater than 1 cm. At the shredder output is therefore provided a second and fundamental grinding operation, for example by means of a hammer or knives mill or an equipment having similar performance, with a control grid of 1 cm. This operation, by virtue of the considerable friction generated by the hammers themselves, results in a clean separation of the glass from the sheets of adhesive (EVA) and at the same time a significant reduction in size. Through a subsequent screening operation with two sieves of 1 mm and 0.1 mm are obtained three fractions with three different purposes.

The coarse fraction having a diameter greater than 1mm (5-10 % of the total weight) containing agglomerated glass-adhesive (plus possibly Tedlar) is sent to a subsequent chemical or heat treatment operation.

The intermediate fraction, having a diameter between 0.1 and 1 mm (about 80 % compared to the initial weight), is directly recoverable as glass.

The fine fraction having a diameter less than 0.1 mm (about 10 % of total weight), containing mainly glass, Si, Cd, Te, Zn, Fe, Al, Ag, Ti, is sent to the chemical section.

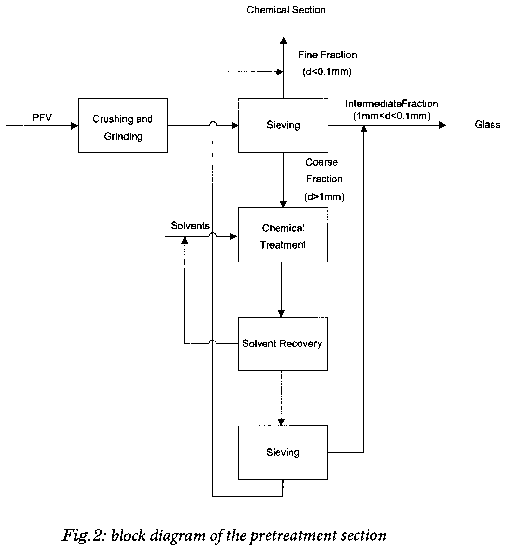

This option of the process, along with the section described in 1b, is illustrated in Figure 2.

### (1b.) Washing with solvent-grinding-screening

The coarse fraction can be subjected to washing with a solvent to solubilize the adhesive resulting in separation of glass-silicon non-reflecting material. To this purpose, in the case of EVA, it can be used a mixture of 70-30 % cyclohexane-acetone in a solid-liquid ratio of 1:2-1:10, preferably 1:5, for 1-2 hours, under stirring and 80-100°C, preferably by refluxing the condensed vapours. Thus the solubilization of the uncrosslinked EVA portion is obtained. Although this portion is reduced, its solubilization leads to a deterioration of the adhesive effect of EVA and thus the detachment of the EVA-glass-silicon non-reflecting material.

Sieving of the solid recovered by solid-liquid separation and drying with sieves 5 and 0.1 mm produces a residue of adhesive (and possibly another polymer, optionally fluorinated polymer, such as Tedlar), an intermediate fraction of directly recoverable glass, a fine fraction to be sent to the chemical section.

This option of the process is illustrated in Figure 2.

### (1c.) Heat treatment-screening

Alternatively to washing with a solvent (1b), the fraction having a diameter greater than 1 mm may be subjected to a heat treatment at the temperature of degradation of the adhesive and of the fluorinated polymer, which for EVA can be 650°C for 30 minutes to determine the degradation of EVA and possible Tedlar. This operation, in addition to determining a weight loss of between 5 and 10% (depending on the feed composition in terms of types of panels) determines the release of the aggregates held together by the glue and a consequent enrichment in smaller-size products. Following the heat treatment a further screening operation can be carried out with 1 and 0.1 mm sieves, from which are obtained: a fraction having a diameter d < 0.1 mm, which is separated and combined with its analogous fraction obtained by grinding, in addition to a fraction having a diameter d > 0.1 mm, which is separated and recovered as glass.

### (2) chemical operations of extraction and recovery

### (2.a) alkaline leaching

The fraction sent to the leaching operation, namely the one having diameter d < 0.1 mm, represents approximately 10 % with respect to the total weight fed and contains mainly glass, Si, Cd, Te, Zn, Fe, Al, Ag, Ti.

According to a preferred configuration, a sequential alkaline leaching is carried out which provides a first step at a pH ranging between 10 and 12, preferably pH 10-11, typically pH 11 and a second step at a pH of between 12 and 14, typically pH 12 to take advantage of the different amphoteric properties of Te, Zn and Al.

In the first step it is typically employed sodium hydroxide 5 M to selectively solubilize the tellurium in the form of sodium tellurite, according to the reaction:

CdTe + 3O₂ + 2NaOH = Cd(OH)₂ + Na₂TeO₃

In this pH range both the cadmium hydroxide and aluminium and zinc hydroxides are insoluble. Thus, using solid-liquid separation by filtration in a filter press or centrifuge, it is possible to separate the solids from the tellurite solution. Then, performing a second extraction step, typically with sodium hydroxide 10 M, solid-liquid ratio of 1:1 or 1:2, 40-80°C, pH 12-14, for about 3 hours, the solubilization of zinc and aluminium is performed according to the reactions:

ZnO + H₂O + 2NaOH = Na₂Zn(OH)₄

Al₂O₃ + H₂O + 6NaOH = 2NaAl(OH)₄

Operating in this way, after a second solid-liquid separation, a liquid stream is obtained containing Zn and Al and a solid residue that is sent to further treatments for the recovery of iron and cadmium. The liquid stream containing Zn and Al is treated at pH < 6, preferably between 3 and 6, with sulfuric acid for the selective removal of aluminum as a solid hydroxide. After removal of the aluminium the Zn remaining in the liquid stream, is sent to the recovery section.

The solid residue from the second alkaline leaching is further treated for the extraction of iron and cadmium. To this purpose a leaching is carried out under mild conditions using 2M H₂SO₄ (solid-liquid ratio 1:1, 50-60°C, 1h, pH between 0.5 and 2, typically pH 1) to solubilize both iron and cadmium, and then, after solid-liquid separation, this solution is brought to pH between 3.5 and 5, typically pH 4 to precipitate Fe and then to pH between 10 and 12, typically pH 11, to precipitate Cd.

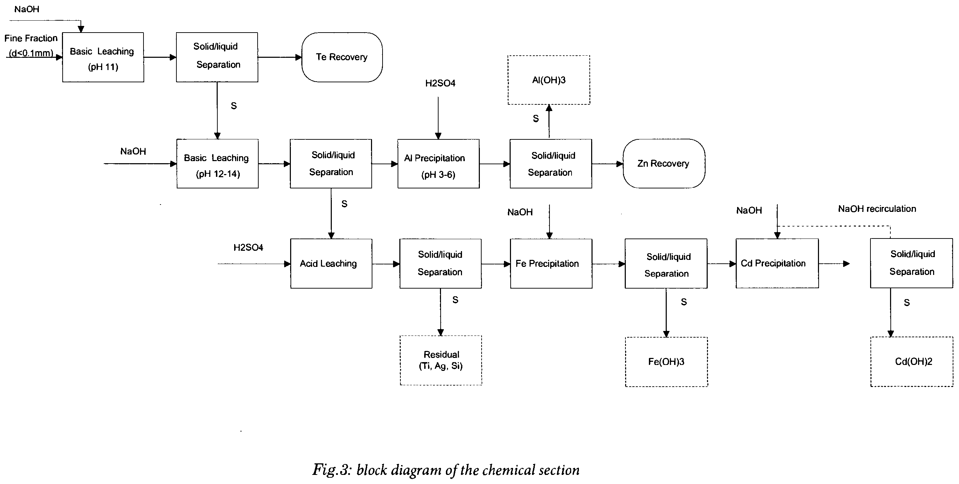

This process option for the chemical section is described in Figure 3.

### (2.b) acid-reducing leaching

Alternatively, the simultaneous extraction of Zn, Al, Fe, Cd and Te from the fine fraction can be carried out by acidic-oxidant leaching as described below.

The leaching operation is carried out at a pH from 2 to 5.5, typically using 5 M sulfuric acid, operating under stirring, at 30-50°C with a solid-liquid ratio 1:1-2:1. Successive stages for the recovery of metals are provided by getting to a pH of about 10-14. The oxidizing conditions are key to achieve the dissolution of tellurium through its oxidation from Te²⁻ to Te⁴⁺. In these conditions, the reactions that occur in the system are the following:
1)

   ZnO + H₂SO₄ = ZnSO₄ + H₂O
2)

   Fe₂O₃ + 3H₂SO₄ = Fe₂(SO4)₃ + 3H₂O

   2FeO + 3H₂SO₄ + H₂O₂ = Fe₂(SO₄)₃ + 4H₂O
3)

   2Al + 3H₂SO₄ + 3H2O2 = Al₂(SO₄)₃ + 6H₂O

   Al₂O₃ + 3H₂SO₄ = Al₂(SO₄)₃ + 3H₂O
4)

   CdTe + H₂SO₄ + 3H₂O₂(a) = CdSO₄ + H₂TeO₃ + 3H₂O

Such oxidizing conditions are preferably obtained by using a stoichiometric excess of 10%hydrogen peroxide.

Working under the above conditions for about 2 hours determines the quantitative extraction of iron (10-15 g/1), aluminum (10-15 g/1), zinc (10-15 g/l), cadmium (1-2 g/l) and tellurium (1-2 g/l). Then, through an operation of solid-liquid separation by filtration in a filter press or by centrifugation, the separation of a liquid stream containing the above listed metals in the respective concentrations, from a solid residue containing glass (d < 0.1 mm), silicon, titanium and silver is obtained. This fraction can be used as secondary raw material in conjunction with primary raw materials in conventional manufacturing processes for the production of compounds of Si, Ag, and Ti. On the contrary, the liquid part, consisting in the lye contains all the remaining metals together. Iron and aluminum are precipitated as hydroxides with the addition of alkaline agents up to pH values of 6.5-7. The solids are separated from the solution by filtration in a filter press or by centrifugation. In the liquid stream zinc is separated from cadmium and tellurium at a pH between 8 and 10, typically pH 8.5, typically by addition of 2.5 M NaOH to obtain the quantitative precipitation of zinc as its hydroxide. After further solid-liquid separation for the separation of zinc hydroxide, the selective separation of tellurium is performed by precipitation at a pH of between 12 and 14 typically pH 12.

### (2.c) Recovery of Tellurium

The solution containing tellurium is sent to a subsequent recovery step, wherein tellurium can be conveniently recovered in metallic form or as an oxide (Te⁰, TeO₂). The metallic tellurium can be prepared starting from the solution of sodium tellurite by the reaction:

TeO₃²- + 4e- + 3H₂O = Te⁰ + 6OH⁻

This reaction is carried out at a temperature of 40-50°C, in a cell with stainless steel anodes and working at a power density of 150-170 A/m². Alternatively, it is possible to operate in potentiostatic conditions applying to the cell a potential of 2-2.5 V. The electrodeposition time varies from 2 to 3 days and the cell can work in batches or continuously, also possibly adopting a recirculation of the electrolytic solution.

The same alkaline leach liquor can also be used for the production of tellurium oxide by precipitation. To this purpose, to the solution of tellurite concentrated nitric acid is added (conc. > 5M) to reach pH 5-6. In this pH range the tellurium oxide (in the form of basic nitrate TeO₂*HNO₃) has the lowest solubility and precipitates, thus by filtration, washing and drying the precipitate a product having about 98 % purity is obtained.

The same recovery steps can be conveniently carried out also in the case of acid-oxidant leaching after separation of iron, aluminum and zinc as described in 2b.

### (2.d) zinc recovery

Zinc recovery may be carried out by two distinct ways: electrolytic recovery of zinc metal, and recovery of zinc oxide by calcination of the precipitated hydroxide. Although these operations are commonly used in the field of hydrometallurgy, they may be performed only if upstream purification operations were carried out as described in 2b. In particular, metallic zinc can be produced by electrodeposition on aluminum cathodes. The operating conditions include the use of anodes made of a lead-antimony alloy, temperature of 20-40 °C, pH conditions in the range 4-6 and moderate agitation. In potentiostatic conditions a potential of 4V is applied to the cell, while in the galvanostatic conditions a current density of 200 A/m² is applied to the cell, adopting a deposition time of between 1 and 2 days. The energy consumption of this operation, which occurs with about 90 % yield of faradic current, is of 2.3-2.7 kWh/kg Zn. The electrolytic cell is provided with a system of pneumatic agitation able to provide a better performance with respect to the more common mechanical agitation and it also provides a filtration system and continuous recirculation of the electrolytic solution. The thus produced metallic zinc meets the commercial standards, as it has a purity > 98%.

Zinc oxide can be produced by dehydration of the precipitated hydroxide. This process, provides a heat treatment at a temperature of about 300°C, for 3 hours, in an atmosphere of air.

The present invention has the following advantages :
1) Possibility of treating simultaneously and in an automated way silicon based panels (crystalline and amorphous) and CdTe panels.
2) Achievement of minimum EU targets for recovery of materials imposed also by only physical operations .
3) Ability to avoid the heat treatment of the modules by using solvents such as a cyclohexane-acetone mixture.
4) Leaching for the extraction of metals carried out only on a fraction of the panel equal to 10% of its total weight saving of 90% on the volume of the equipment in the chemical section.

Although the typical operations of hydrometallurgy such as leaching, precipitation and electrolysis are common knowledge to the industry, it is proposed here as a more innovative element their particular application that can not be performed by technicians in the field without the specifications proposed here. It should also be pointed out that, if the waste fed provides, as is the object of the invention, the possibility of feeding different types of solar panels, all the operations proposed by the above processes would not be applicable with their technical specifications, nor with their development. This is due to the presence of other elements such as zinc and tin which would render ineffective the operations of purification and recovery here proposed.

## Claims

1. A process for treating silicon and cadmium-tellurium photovoltaic panels, altogether or separately, comprising (1) physical preliminary operations, (2) chemical extraction and recovery operations in cooperation relationship, said operations comprising the steps of:
- Crushing, grinding and screening to dimensions of 1 mm and 0.1 mm to obtain three fractions, a coarse fraction which is serially treated to remove adhesives and possible additional polymeric components and a subsequent separation by screening; an intermediate fraction that can be directly recovered as glass; a fine fraction that is directly sent to the subsequent treatment steps that comprise:
- Alkaline sequential leaching under a stream of air, comprising a first alkaline leaching step at pH 10-12 to extract and selectively separate tellurium and a second alkaline leaching step at pH 12-14 to be carried out on the solid matter coming from the first alkaline leaching step to extract the remaining metals;
- Separation of Al-Zn from the leach liquor coming from the second alkaline leaching step by means of acidification to pH<6;
- Acidic leaching at pH <6, preferably pH 0,5-2 on the solid residue coming from the second alkaline leaching step to recover Fe and Cd.

2. A process for treating silicon and cadmium-tellurium photovoltaic panels, altogether or separately, comprising (1) physical preliminary operations, (2) chemical extraction and recovery operations in cooperation relationship, said operations comprising the steps of:
- Crushing, grinding and screening to dimensions of 1 mm and 0.1 mm to obtain three fractions, a coarse fraction which is serially treated to remove adhesives and possible additional polymeric components and a subsequent separation by screening; an intermediate fraction that can be directly recovered as glass; a fine fraction that is directly sent to the subsequent treatment steps that comprise:
an acidic-oxidizing leaching step at pH <6, preferably pH 2-5.5, using preferably hydrogen dioxide as the oxidant; followed by sequential steps of alkalinization and solid/liquid separation with recovery steps of metals by sequential precipitation of the corresponding hydroxides at increasing pH from pH 4 to pH 14 to recover Fe, Al, Zn, Cd and Te.

3. Process according any one of claims 1-2, wherein tellurium recovery is carried out in a metallic form by means of electrolysis from an alkaline solution, or, alternatively, in the form of a basic oxide (TeO₂*HNO₃) by means of precipitation; the spent solution from the tellurium electrolysis being preferably recirculated to the top of the leaching reactor.

4. The process according to any one of claims 1-3, wherein the zinc recovery is carried out by means of electrolysis or, alternatively, in the form of an oxide by means of precipitation and thermal treatment; the spent solution from the zinc electrolysis being preferably recirculated to the top of the leaching reactor.

5. The process according to any one of claims 1-4, wherein removal of adhesive and of possible additional polymers is carried out by means of a chemical treatment with solvent, followed by drying up and screening steps with 5 mm and 0.1 mm screens.

6. The process according to any one of claims 1-4, wherein removal of adhesives and of additional polymers is carried out by means of a thermal treatment at the degradation temperature of said adhesive and said polymers and following screening operations at 1 and 0.1 mm.

7. The process according to any one of claims 1-6, wherein the acidic and basic leaching operations are carried out under stirring, at a temperature of 40-60°C, with a solid/liquid ratio of 1:1 or 1:2.

## Patentansprüche

1. Verfahren zur Behandlung von photovoltaischen Panels aus Silikon und Kadmium-Tellurium, zusammen oder einzeln, aufweisend (1) physikalische vorläufige Operationen, (2) chemische Extraktions- und Rückgewinnungsoperationen in kooperierender Beziehung, wobei die besagten Operationen die folgenden Schritte aufweisen:
- Zerdrücken, Zermahlen und Aussieben auf Dimensionen von 1 mm und 0.1 mm, um drei Fraktionen zu erhalten: eine grobe Fraktion, welche seriell behandelt wird, um Klebemittel und mögliche zusätzliche polymere Komponenten zu entfernen, und eine anschliessende Trennung durch Aussieben; eine intermediäre Fraktion, welche direkt als Glas rückgewonnen werden kann; eine feine Fraktion, welche direkt zu den anschliessenden Behandlungsschritten weiter geleitet werden kann, aufweisend:
- fortlaufendes alkalisches Auslaugen unter einem Luftstrom, aufweisend einen ersten Schritt des alkalischen Auslaugens bei pH 10-12, um Tellurium zu extrahieren und selektiv zu trennen, und einen zweiten Schritt des alkalischen Auslaugens bei pH 12-14, welcher auf dem Feststoff ausgeführt werden soll, der vom ersten Schritt des alkalischen Auslaugens stammt, um die verbleibenden Metalle zu extrahieren;
- Trennung von Al-Zn aus der Laugenlösung, welche aus dem zweiten Schritt des alkalischen Auslaugens stammt, mittels Ansäuerung auf pH<6;
- saures Auslaugen bei pH<6, vorzugsweise pH 0.5-2 auf dem Feststoff-Rest, der vom zweiten Schritt des alkalischen Auslaugens stammt, um Fe und Cd rückzugewinnen.

2. Verfahren zur Behandlung von photovoltaischen Panels aus Silikon und Kadmium-Tellurium, zusammen oder einzeln, aufweisend (1) physikalische vorläufige Operationen, (2) chemische Extraktions- und Rückgewinnungsoperationen in kooperierender Beziehung, wobei die besagten Operationen die folgenden Schritte aufweisen:
- Zerdrücken, Zermahlen und Aussieben auf Dimensionen von 1 mm und 0.1 mm, um drei Fraktionen zu erhalten: eine grobe Fraktion, welche seriell behandelt wird, um Klebemittel und mögliche zusätzliche polymere Komponenten zu entfernen, und eine anschliessende Trennung durch Aussieben; eine intermediäre Fraktion welche direkt als Glas rückgewonnen werden kann; eine feine Fraktion, welche direkt zu den anschliessenden Behandlungsschritten weiter geleitet werden kann, aufweisend:
- einen Schritt des sauer-oxidierenden Auslaugens bei pH<6, vorzugsweise pH 2-5.5, vorzugsweise unter Verwendung von Wasserstoffdioxid als Oxidans; gefolgt von sequenziellen Schritten der Alkalisierung und Trennung von Feststoff/Flüssigkeit mit Schritten zur Rückgewinnung von Metallen durch sequenzielle Präzipitation der korrespondierenden Hydroxide bei zunehmendem pH von pH 4 auf pH 14, um Fe, Al, Zn, Cd und Te rückzugewinnen.

3. Verfahren gemäss einem der Ansprüche 1-2, wobei die Rückgewinnung von Tellurium in einer metallischen Form ausgeführt wird, mittels Elektrolyse aus einer alkalischen Lösung, oder, alternativ, in der Form eines basischen Oxids (TeO₂*HNO₃) mittels Präzipitation; wobei die verbrauchte Lösung von der Tellurium-Elektrolyse vorzugsweise an die Spitze des Auslauge-Reaktors zurück geführt wird.

4. Verfahren gemäss einem der Ansprüche 1-3, wobei die Rückgewinnung von Zink ausgeführt wird mittels Elektrolyse, oder, alternativ, in Form eines Oxids mittels Präzipitation und Wärmebehandlung; wobei die verbrauchte Lösung von der Zink-Elektrolyse vorzugsweise an die Spitze des Auslage-Reaktors zurück geführt wird.

5. Verfahren gemäss einem der Ansprüche 1-4, wobei die Entfernung von Klebemitteln und von möglichen zusätzlichen polymeren ausgeführt wird mittels einer chemischen Behandlung mit Lösungsmittel, gefolgt von Schritten der Austrocknung und des Aussiebens mit 5 mm und 0.1 mm Sieben.

6. Verfahren gemäss einem der Ansprüche 1-4, wobei die Entfernung von Klebemitteln und von zusätzlichen Polymeren ausgeführt wird mittels einer Wärmebehandlung bei Degradationstemperatur des besagten Klebemittels und der besagten Polymere, gefolgt von Operationen des Aussiebens bei 1 und 0.1 mm.

7. Verfahren gemäss einem der Ansprüche 1-6, wobei die sauren und basischen Auslaugeoperationen unter Rühren ausgeführt werden, bei einer Temperatur von 40-60 °C, mit einem Verhältnis von Feststoff/Flüssigkeit von 1:1 oder 1:2.

## Revendications

1. Un procédé de traitement pour des panneaux photovoltaïques à base de silicium et tellurure de cadmium, ensemble ou de façon séparée, comprenant (1) des opérations physiques préliminaires, des extractions chimiques (2) et opérations de récupération en relation de coopération, lesdites opérations comprenant les étapes de :
- écraser, broyer et cribler à des dimensions de 1 mm et 0.1 mm pour obtenir trois fractions, une fraction grosse qui est traitée en série pour enlever des adhésifs et des composantes en polymère supplémentaires possibles et un séparation subséquente par criblage ; une fraction intermédiaire qui peut être directement récupérée en tant que verre ; une fraction fine qui est directement envoyée aux étapes de traitement subséquentes qui comprennent :
- lixiviation alcaline séquentielle sous un flux d'air, comprenant une première étape de lixiviation alcaline à un pH de 10 à 12 pour extraire et sélectivement séparer le tellure et une seconde étape de lixiviation alcaline à un pH de 12 à 14 destinée à être effectuée sur la matière solide émanant de la première étape de lixiviation alcaline pour extraire les métaux restants ;
- séparation de Al-Zn de la liqueur de lixiviation émanant de la seconde étape de lixiviation alcaline au moyen d'une acidification vers un pH < 6 ;
- lixiviation acide à un pH < 6, préférablement à un pH de 0.5 à 2 sur le résidu solide émanant de la seconde étape de lixiviation alcaline pour récupérer le Fe et le Cd.

2. Un procédé de traitement pour des panneaux photovoltaïques à base de silicium et tellurure de cadmium, ensemble ou de façon séparée, comprenant (1) des opérations physiques préliminaires, des extractions chimiques (2) et opérations de récupération en relation de coopération, lesdites opérations comprenant les étapes de :
- une étape de lixiviation acide à un pH < 6, préférablement à un pH de 2 à 5.5, en utilisant préférablement du dioxyde de hydrogène en tant qu'oxydant, suivi par des étapes d'alcalinisation séquentielles et de séparation solide/liquide avec des étapes de récupération de métaux par précipitation séquentielle des hydroxydes correspondants à un pH montant de 4 à 14 pour récupérer le Fe, l'Al, le Zn, le Cd et le Te.

3. Un procédé selon l'une quelconque des revendications 1 à 2, dans lequel la récupération tellure est effectuée sous forme métallique au moyen d'électrolyse depuis une solution alcaline, ou, alternativement, sous forme d'un oxyde basique (TeO₂*HNO₃) au moyen de précipitation ; la solution épuisée de l'électrolyse de tellure étant préférablement recirculée vers le haut du réacteur de lixiviation.

4. Un procédé selon l'une quelconque des revendications 1 à 3, dans lequel la récupération de zinc est effectuée au moyen d'électrolyse ou, alternativement, sous forme d'un oxyde au moyen de précipitation et de traitement thermique ; la solution épuisée de l'électrolyse de zinc étant préférablement recirculée vers le haut du réacteur de lixiviation.

5. Un procédé selon l'une quelconque des revendications 1 à 4, dans lequel l'enlèvement d'adhésifs et de polymère supplémentaire possible est effectué au moyen d'un traitement chimique avec du solvant, suivi d'étapes de séchage et de criblage avec des tamis de 5 mm et 0.1 mm.

6. Un procédé selon l'une quelconque des revendications 1 à 4, dans lequel l'enlèvement d'adhésifs est de polymère supplémentaire est effectué au moyen d'un traitement thermique à la température de dégradation du dit adhésive et des dits polymères et suivant des opérations de criblage à 1 et 0.1 mm.

7. Un procédé selon l'une quelconque des revendications 1 à 6, dans lequel les opérations de lixiviation acide et basique sont effectuées sous agitation à une température de 40 à 60°C, avec un rapport solide/liquide de 1 :1 ou 1 :2.
